# EUROPEAN PATENT APPLICATION

(11) **EP 4 496 025 A1**
(43) Date of publication of application: **22.01.2025**
(21) Application number: 23770460.6
(22) Date of filing: 03.03.2023
(51) Int. Cl.: H01M 4/131, H01M 4/36, H01M 4/505, H01M 4/525, H01M 4/62

(54) **NON-AQUEOUS ELECTROLYTE SECONDARY BATTERY**

(30) Priority: 18.03.2022 JP 2022043962
(71) Applicant: Panasonic Energy Co., Ltd., Osaka 570-8511 (JP)
(72) Inventor: MAEKAWA, Masanori, Kadoma-shi, Osaka 571-0057 (JP); ICHIKAWA, Yuta, Kadoma-shi, Osaka 571-0057 (JP)
(74) Representative: Novagraaf International SA
(86) International application number: PCT/JP2023/008016
(87) International publication number: WO 2023/176503

(57) **Abstract**

A positive electrode mixture layer of this non-aqueous electrolyte secondary battery includes a positive electrode active material and a cellulose derivative. The positive electrode active material contains a lithium-transition metal composite oxide containing 80 mol% or more of Ni with respect to the total number of moles of metal elements except for Li. On each of the surfaces of primary particles of the lithium-transition metal compound oxide, a Me-containing layer containing a metal element Me (where Me represents at least one element selected from Nb, Sr, Mo, and Ca) and a W-containing layer containing W are formed. The contained amount of Me in the Me-containing layer is 0.005-1 mol% with respect to the total number of moles of metal elements except for Li in the lithium-transition metal composite oxide. The W-containing layer covers at least a part of the Me-containing layer.

## Description

### TECHNICAL FIELD

The present disclosure relates to a non-aqueous electrolyte secondary battery.

### BACKGROUND ART

Non-aqueous electrolyte secondary batteries that comprise a positive electrode, a negative electrode, and a non-aqueous electrolyte, and that allow Li ions and the like to move between the positive electrode and the negative electrode to perform charge and discharge have been conventionally commonly used as secondary batteries with high output and high capacity. As a positive electrode active material of the non-aqueous electrolyte secondary battery, a lithium-transition metal composite oxide including transition metals such as nickel, cobalt, and manganese is commonly used. Patent Literature 1 discloses art of coating a surface of a lithium-transition metal composite oxide with a predetermined metal oxide or the like in order to inhibit a reaction between the lithium-transition metal composite oxide and a non-aqueous electrolyte.

### CITATION LIST

### PATENT LITERATURE

PATENT LITERATURE 1: Japanese Unexamined Patent Application Publication No. 2003-173775

### SUMMARY

In recent years, the non-aqueous electrolyte secondary batteries have been widely used as a power source for an electric vehicle, and the like, and such use requires improvement of load characteristics to shorten a charge time. In addition, a design of increasing a content rate of Ni in a lithium-transition metal composite oxide as a positive electrode active material is considered to obtain a high discharge capacity. However, when the proportion of Ni is greater than or equal to 80 mol% relative to the total number of moles of metal elements excluding Li, a layered structure of the lithium-transition metal composite oxide becomes unstable, resulting in a low battery capacity with a charge-discharge cycle in some cases. The art described in Patent Literature 1 does not consider achievement of both the charge-discharge cycle characteristics and the load characteristics in the battery with a high capacity, and still has room for improvement.

It is an advantage of the present disclosure to provide a non-aqueous electrolyte secondary battery having a high capacity and excellent charge-discharge cycle characteristics and load characteristics.

A non-aqueous electrolyte secondary battery of an aspect of the present disclosure comprises: a positive electrode; a negative electrode; and a non-aqueous electrolyte, wherein the positive electrode has a positive electrode current collector and a positive electrode mixture layer formed on a surface of the positive electrode current collector, the positive electrode mixture layer includes a positive electrode active material and a cellulose derivative, the positive electrode active material contains a lithium-transition metal composite oxide containing greater than or equal to 80 mol% of Ni relative to a total number of moles of metal elements excluding Li, the lithium-transition metal composite oxide has secondary particles each formed by aggregation of primary particles, on surfaces of the primary particles, a Me-containing layer that contains a metal element Me (Me represents at least one element selected from the group consisting of Nb, Sr, Mo, and Ca) and a W-containing layer that contains W are formed, a content of the Me in the Me-containing layer is greater than or equal to 0.005 mol% and less than or equal to 1 mol% relative to the total number of moles of metal elements in the lithium-transition metal composite oxide excluding Li, and the W-containing layer coats at least a part of the Me-containing layer.

According to the non-aqueous electrolyte secondary battery of an aspect of the present disclosure, the battery capacity, the charge-discharge cycle characteristics, and the load characteristics can be improved.

### BRIEF DESCRIPTION OF DRAWING

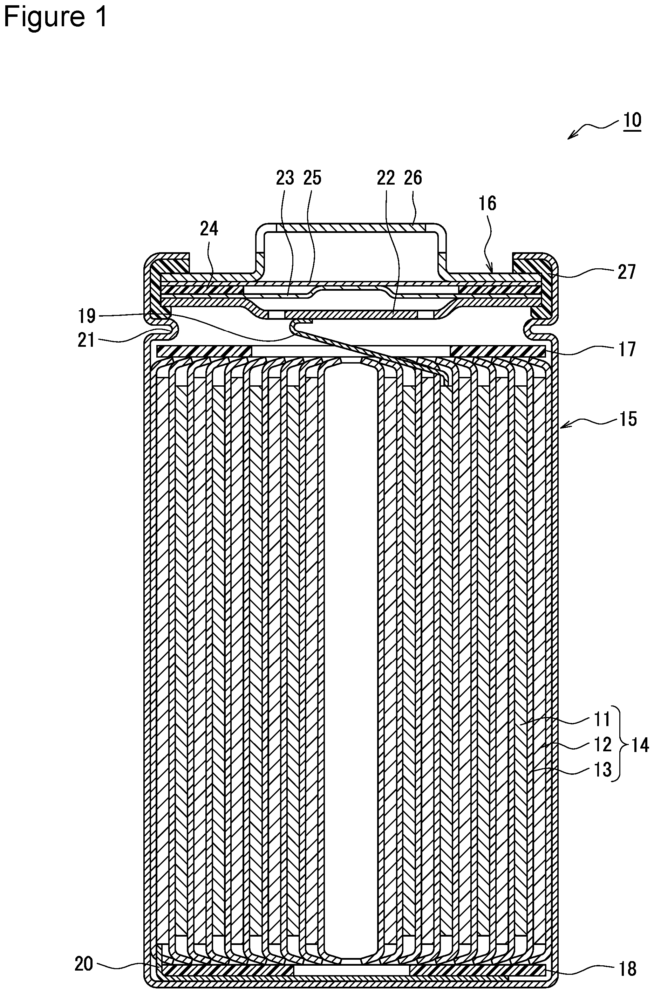

FIG. 1 is an axial sectional view of a cylindrical secondary battery of an example of an embodiment.

### DESCRIPTION OF EMBODIMENTS

Hereinafter, an example of an embodiment of a cylindrical secondary battery according to the present disclosure will be described in detail with reference to the drawing. In the following description, specific shapes, materials, values, directions, and the like, which are examples for facilitating understanding of the present invention, may be appropriately modified with specifications of secondary batteries. Hereinafter, a cylindrical secondary battery in which a wound electrode assembly is housed in a cylindrical exterior will be exemplified, but the electrode assembly is not limited to the wound electrode assembly, and may be a stacked electrode assembly in which a plurality of positive electrodes and a plurality of negative electrodes are alternately stacked one by one via a separator. The exterior is not limited to the cylindrical exterior, and may be, for example, a rectangular exterior or a coin-shaped exterior. The exterior may be a pouch composed of laminated sheets including a metal layer and a resin layer. The description "greater than or equal to a numerical value (A) and less than or equal to a numerical value (B)" herein means greater than or equal to the numerical value (A) and less than or equal to the numerical value (B).

FIG. 1 is an axial sectional view of a cylindrical secondary battery 10 of an example of an embodiment. In the secondary battery 10 illustrated in FIG. 1, an electrode assembly 14 and a non-aqueous electrolyte (not illustrated) are housed in an exterior 15. The electrode assembly 14 has a wound structure in which a positive electrode 11 and a negative electrode 12 are wound via a separator 13. Hereinafter, for convenience of description, a sealing assembly 16 side will be described as the "upper side", and the bottom side of the exterior 15 will be described as the "lower side".

An end of an opening on the upper side of the exterior 15 is capped with the sealing assembly 16 to seal an inside of the secondary battery 10. Insulating plates 17 and 18 are provided on the upper and lower sides of the electrode assembly 14, respectively. A positive electrode lead 19 extends upward through a through hole of the insulating plate 17, and is welded to the lower face of a filter 22, which is a bottom plate of the sealing assembly 16. In the secondary battery 10, a cap 26, which is a top plate of the sealing assembly 16 electrically connected to the filter 22, becomes a positive electrode terminal. On the other hand, a negative electrode lead 20 extends through an outside of the insulating plate 18 toward the bottom side of the exterior 15, and is welded to a bottom inner face of the exterior 15. In the secondary battery 10, the exterior 15 becomes a negative electrode terminal.

The exterior 15 is, for example, a bottomed cylindrical metallic exterior housing can. A gasket 27 is provided between the exterior 15 and the sealing assembly 16 to achieve sealability inside the secondary battery 10. The exterior 15 has a grooved portion 21 formed by, for example, pressing the side wall thereof from the outside. The grooved portion 21 is preferably formed in a circular shape along a circumferential direction of the exterior 15, and supports the sealing assembly 16 via the gasket 27 with the upper face thereof.

The sealing assembly 16 has the filter 22, a lower vent member 23, an insulating member 24, an upper vent member 25, and the cap 26 that are stacked in this order from the electrode assembly 14 side. Each member constituting the sealing assembly 16 has, for example, a disk shape or a ring shape, and each member except for the insulating member 24 is electrically connected to each other. The lower vent member 23 and the upper vent member 25 are connected to each other at each of middle portions thereof, and the insulating member 24 is interposed between circumferences thereof. If the internal pressure of the battery increases due to abnormal heat generation, for example, the lower vent member 23 breaks and thereby the upper vent member 25 expands toward the cap 26 side to be separated from the lower vent member 23, resulting in cutting off of an electrical connection between both members. If the internal pressure further increases, the upper vent member 25 breaks, and gas is discharged through an opening of the cap 26.

Hereinafter, the positive electrode 11, the negative electrode 12, the separator 13, and the non-aqueous electrolyte, which constitute the secondary battery 10, particularly the positive electrode 11, will be described in detail.

### [Positive Electrode]

The positive electrode 11 has a positive electrode current collector and a positive electrode mixture layer formed on a surface of the positive electrode current collector. The positive electrode mixture layer is preferably formed on both surfaces of the positive electrode current collector. For the positive electrode current collector, a foil of a metal stable within a potential range of the positive electrode 11, such as aluminum and an aluminum alloy, a film in which such a metal is disposed on a surface layer, or the like can be used.

The positive electrode mixture layer includes a positive electrode active material and a cellulose derivative. A content of the positive electrode active material in the positive electrode mixture layer is, for example, greater than or equal to 80 mass% and less than or equal to 99 mass% relative to a total mass of the positive electrode mixture layer. An active material density of the positive electrode mixture layer is, for example, greater than or equal to 3.30 g/cm³ and less than or equal to 3.64 g/cm³. The positive electrode 11 can be produced by, for example, applying a positive electrode mixture slurry including the positive electrode active material, the cellulose derivative, and the like on the surface of the positive electrode current collector, drying the coating film, and then rolling the coating film by using a roller or the like.

The positive electrode mixture layer containing the cellulose derivative improves the load characteristics. This is presumably because conductivity of Li ions in the positive electrode mixture layer is improved by interposing the cellulose derivative. Examples of the cellulose derivative included in the positive electrode mixture layer include carboxymethylcellulose and a salt thereof, and methylcellulose and a salt thereof. The cellulose derivative preferably includes methylcellulose in terms of inhibition of increase in a viscosity of the positive electrode mixture slurry, and particularly preferably includes methylcellulose having a weight-average molecular weight of greater than or equal to 10000 and less than or equal to 150000.

A content of the cellulose derivative in the positive electrode mixture layer is preferably greater than or equal to 0.005 mass% and less than or equal to 0.5 mass%, and more preferably greater than or equal to 0.01 mass% and less than or equal to 0.1 mass% relative to the total mass of the positive electrode active material. The content of the cellulose derivative within this range may improve the charge-discharge cycle characteristics and the load characteristics while inhibiting decrease in the battery capacity.

The positive electrode active material included in the positive electrode mixture layer contains a lithium-transition metal composite oxide containing greater than or equal to 80 mol% of Ni relative to the total number of moles of the metal elements excluding Li. This may attempt to increase the capacity of the battery. The lithium-transition metal composite oxide may have, for example, a layered structure belonging to the space group R-3m, a layered structure belonging to the space group C2/m, and the like. Among them, the layered structure belonging to the space group R-3m is preferable in terms of the higher capacity, the stability of the crystal structure, and the like. The layered structure of the lithium-transition metal composite oxide may include a transition metal layer, a Li layer, and an oxygen layer.

The lithium-transition metal composite oxide is, for example, represented by the general formula LiₐNi_{b}Co_{1-b-c}X_{c}O_{d}, wherein 0.9≤a≤1.25, 0.80≤b≤0.96, 0≤c≤0.20, 1.9≤d≤2.1, and X represents at least one element selected from the group consisting of Mn and Al. The mole fractions of the metal elements contained in the lithium-transition metal composite oxide can be measured by inductively coupled plasma (ICP) atomic emission spectrometry.

The lithium-transition metal composite oxide has secondary particles each formed by aggregation of primary particles. The secondary particles are particles having a median diameter (D50) on a volumetric basis of preferably greater than or equal to 3 µm and less than or equal to 30 µm, more preferably greater than or equal to 5 µm and less than or equal to 25 µm, and particularly preferably greater than or equal to 7 µm and less than or equal to 15 µm. The D50 means a particle diameter at which a cumulative frequency is 50% from a smaller particle diameter side in a particle size distribution on a volumetric basis. The particle size distribution of the secondary particles of the lithium-transition metal composite oxide can be measured by using a laser diffraction-type particle size distribution measuring device (for example, MT3000II, manufactured by MicrotracBEL Corp.) with water as a dispersion medium. A particle diameter of the primary particles constituting the secondary particles is, for example, greater than or equal to 0.05 µm and less than or equal to 1 µm. The particle diameter of the primary particles is measured as a diameter of a circumscribed circle in a particle image observed with a scanning electron microscope (SEM).

On surfaces of the primary particles, a Me-containing layer that contains Me (Me represents at least one element selected from the group consisting of Nb, Sr, Mo, and Ca) and a W-containing layer that contains W are formed, and the W-containing layer coats at least a part of the Me-containing layer. The W-containing layer coating the Me-containing layer improves the charge-discharge cycle characteristics and the load characteristics. It is presumed that the W-containing layer protects the Me-containing layer from the non-aqueous electrolyte, resulting in improved charge-discharge cycle characteristics and the load characteristics. The description "the Me-containing layer and the W-containing layer are formed on the surfaces of the primary particles" means that each of the Me-containing layer and the W-containing layer is present on surfaces of the secondary particles or present on an interface where the primary particles are contacted with each other. The Me-containing layer may be scatteringly present so as to coat at least a part of the surfaces of the primary particles, or may be present so as to coat an entire surface of the primary particles. The W-containing layer coats a part or entirety of the Me-containing layer, and a part of the W-containing layer may coat the surfaces of the primary particles. The Me-containing layer contains, for example, an oxide of Me. The W-containing layer contains, for example, WO₃.

A content of Me in the Me-containing layer is greater than or equal to 0.005 mol% and less than or equal to 1 mol% relative to the total number of moles of metal elements in the lithium-transition metal composite oxide excluding Li. If the content of Me is out of this range, at least one of the charge-discharge cycle characteristics and the load characteristics cannot be achieved. The content of Me is more preferably greater than or equal to 0.01 mol% and less than or equal to 0.5 mol%.

A content of W in the W-containing layer is preferably less than or equal to 0.2 mol% relative to the total number of moles of the metal elements in the lithium-transition metal composite oxide excluding Li. If the content of W is greater than 0.2 mol%, the battery capacity may be decreased. A lower limit of the content of W is, for example, 0.01 mol%, or may be 0.06 mol%.

The presence of the Me-containing layer on the surface of the lithium-transition metal composite oxide can be confirmed by energy dispersive X-ray spectrometry (TEM-EDX). Contents of Sr, Ca, and W in a surface-modifying layer can be measured by inductively coupled plasma (ICP) atomic emission spectrometry.

Next, an example of a method for manufacturing the positive electrode active material according to the present embodiment will be described. The method for manufacturing the positive electrode active material includes, for example, a synthesis step, a washing step, and an adding step.

In the synthesis step, for example, a metal oxide containing Ni, a Li compound, and a Me compound are mixed and calcined to obtain the lithium-transition metal composite oxide in which the Me-containing layer is formed.

The metal oxide can be obtained by, for example, while stirring a solution of metal salts including Ni and the optional metal elements (such as Co, Al and Mn), a solution of an alkali such as sodium hydroxide is added dropwise to adjust a pH on the alkaline side (for example, greater than or equal to 8.5 and less than or equal to 12.5) to precipitate (coprecipitate) a composite hydroxide including Ni and the optional metal elements, and thermally treating this composite hydroxide. The thermal treatment temperature is not particularly limited, and may be, for example, within a range of greater than or equal to 300°C and less than or equal to 600°C.

Examples of the Li compound include Li₂CO₃, LiOH, Li₂O₂, Li₂O, LiNO₃, LiNO₂, Li₂SO₄, LiOH·H₂O, LiH, and LiF. Examples of the Me compound include a hydroxide, an oxide, a carbonate salt, a sulfate salt, a nitrate salt, and a chloride that contain Me.

A mixing ratio between the metal oxide, the Li compound, and the Me compound is preferably set so that the mole ratio of the metal elements excluding Li : Li : Me is within a range of, for example, 1 : (greater than or equal to 0.9 and less than or equal to 1.2) : (greater than or equal to 0.00005 and less than or equal to 0.005) in terms of easily regulating the above parameters within the specified regions. When the metal oxide, the Li compound, and the like are mixed, a further metal raw material may be added as necessary. Here, the further metal raw material refers to an oxide or the like including a metal element other than the metal elements constituting the metal oxide and other than the Me.

The mixture of the metal oxide and the Li compound is calcined under an oxygen atmosphere, for example. The calcining conditions are a heating rate within greater than or equal to 450°C and less than or equal to 650°C being within a range of greater than 1.0 °C/min and less than or equal to 5.5 °C/min, and a heating rate from 650°C to a highest reaching temperature being within a range of greater than 0.1 °C/min and less than or equal to 3.5 °C/min, for example. The highest reaching temperature may be within a range of greater than or equal to 700°C and less than or equal to 800°C. A holding time at the highest reaching temperature may be greater than or equal to 1 hour and less than or equal to 10 hours. On the primary particle surfaces of the lithium-transition metal composite oxide after the synthesis step, the Me-containing layer is formed.

In the washing step, the lithium-transition metal composite oxide obtained in the synthesis step is firstly washed with water and dehydrated to obtain a cake-like composition. The washing with water and the dehydration can be performed by known methods under known conditions. Thereafter, the cake-like composition is dried to obtain a powdery composition. The drying conditions are, for example, under a vacuum atmosphere at greater than or equal to 150°C and less than or equal to 400°C for greater than or equal to 0.5 hours and less than or equal to 15 hours.

In the adding step, a W compound or a W-containing solution is added to the lithium-transition metal composite oxide after the washing step to obtain the positive electrode active material. The W compound is added to, for example, the lithium-transition metal composite oxide wetted by adding water. The Li compound remains in the lithium-transition metal composite oxide after the washing step, and this remaining Li compound is dissolved in water to generate an alkaline aqueous solution. The W compound is dissolved in the alkaline aqueous solution to spread on the entire surface of the calcined product. Examples of the W compound may include tungsten oxide (WO₃) and lithium tungstate (Li₂WO₄, Li₄WO₅, and Li₆W₂O₉). An amount of W added may be greater than or equal to 0.01 mol% and less than or equal to 0.2 mol% relative to a total number of moles of metal elements in the lithium-transition metal composite oxide excluding Li. When the W-containing solution is added to the lithium-transition metal composite oxide, a W concentration in the W-containing solution is, for example, greater than or equal to 0.05 mol/L, and preferably greater than or equal to 0.1 mol/L and less than or equal to 1 mol/L. The W-containing solution is not particularly limited as long as it contains W, but preferably a solution in which a W compound easily soluble in an alkaline solution, such as tungsten oxide, lithium tungstate, and ammonium tungstate, is dissolved in an aqueous solution of lithium hydroxide.

As noted above, the W compound or the W-containing solution is added, and the lithium-transition metal composite oxide is subjected to a thermal treatment to produce the positive electrode active material. The thermal treatment condition is not particularly limited, and may be, for example, under a vacuum atmosphere at a thermal treatment temperature of greater than or equal to 150°C and less than or equal to 400°C for a thermal treatment time of greater than or equal to 0.5 hours and less than or equal to 15 hours. This may form the Me-containing layer on the primary particle surfaces of the lithium-transition metal composite oxide, and may further form the W-containing layer on the Me-containing layer.

The mole fractions of the metal elements contained in the positive electrode active material obtained above are measured by inductively coupled plasma (ICP) atomic emission spectrometry, and may be represented by the general formula LiₐNi_{b}Co_{1-b-c}X_{c}MeₛWₜO_{d}, wherein 0.9≤a≤1.25, 0.80≤b≤0.96, 0≤c≤0.20, 1.9≤d≤2.1, 0.00005≤s≤0.005, 0.0001≤t≤0.002, X represents at least one element selected from the group consisting of Mn and Al, and Me represents at least one element selected from the group consisting of Nb, Sr, Mo, and Ca. A part of Me and W may form a solid solution with the lithium-transition metal composite oxide.

The positive electrode active material may include, in addition to the lithium-transition metal composite oxide of the present embodiment, a further lithium-transition metal composite oxide. Examples of the further lithium-transition metal composite oxide include a lithium-transition metal composite oxide having a Ni content of less than or equal to 0 mol% and less than 80 mol%.

The positive electrode mixture layer may further include a conductive agent. Examples of the conductive agent included in the positive electrode mixture layer include carbon-based particles such as carbon black (CB), acetylene black (AB), Ketjenblack, carbon nanotube (CNT), graphene, and graphite. These may be used singly, or may be used in combination of two or more.

The positive electrode mixture layer may further include a binder. Examples of the binder included in the positive electrode mixture layer include a fluororesin such as polytetrafluoroethylene (PTFE) and polyvinylidene fluoride (PVDF), a polyimide resin, an acrylic resin, a polyolefin resin, and polyacrylonitrile (PAN). These may be used singly, or may be used in combination of two or more thereof.

### [Negative Electrode]

The negative electrode 12 has, for example, a negative electrode current collector and a negative electrode mixture layer formed on a surface of the negative electrode current collector. The negative electrode mixture layer is preferably formed on both surfaces of the negative electrode current collector. For the negative electrode current collector, a foil of a metal stable within a potential range of the negative electrode, such as copper and a copper alloy, a film in which such a metal is disposed on a surface layer thereof, and the like may be used.

The negative electrode mixture layer includes, for example, a negative electrode active material and a binder. A content of the negative electrode active material in the negative electrode mixture layer is, for example, greater than or equal to 80 mass% and less than or equal to 99 mass% relative to a total mass of the negative electrode mixture layer. The negative electrode 12 can be produced by, for example, applying a negative electrode mixture slurry including the negative electrode active material, the binder, and the like on the surface of the negative electrode current collector, drying the coating film, and then compressing the coating film by using a roller or the like.

The negative electrode active material included in the negative electrode mixture layer is not particularly limited as long as it can reversibly occlude and release Li ions, and carbon materials such as graphite are typically used. The graphite may be any of natural graphite such as flake graphite, massive graphite, and amorphous graphite, and artificial graphite such as massive artificial graphite and graphitized mesophase carbon microbead. As the negative electrode active material, a metal that forms an alloy with Li, such as Si and Sn, a metal compound including Si, Sn, and the like, a lithium-titanium composite oxide, and the like may also be used. For example, a silicon oxide represented by SiOₓ ("x" represents greater than or equal to 0.5 and less than or equal to 1.6), a silicon-containing material in which Si fine particles are dispersed in a lithium silicate phase represented by Li_{2y}SiO_{(2+y)} (0<y<2), a silicon-containing material in which Si fine particles are dispersed in a carbon phase, or the like may be used in combination with the graphite.

Example of the binder included in the negative electrode mixture layer include styrene-butadiene rubber (SBR), nitrile-butadiene rubber (NBR), carboxymethylcellulose (CMC) or a salt thereof (which may be CMC-Na, CMC-K, CMC-NH₄, and the like, or a partially neutralized salt), polyacrylic acid (PAA) or a salt thereof (which may be PAA-Na, PAA-K, and the like, or a partially neutralized salt), and polyvinyl alcohol (PVA). These may be used singly, or may be used in combination of two or more thereof.

### [Separator]

For the separator 13, a porous sheet having an ion permeation property and an insulation property, or the like is used, for example. Specific examples of the porous sheet include a fine porous thin film, a woven fabric, and a nonwoven fabric. As a material for the separator, a polyolefin resin such as polyethylene and polypropylene, cellulose, or the like is preferable. The separator 13 may be a laminate having a cellulose fiber layer and a thermoplastic resin fiber layer such as an olefin resin. The separator 13 may be a multi-layer separator including a polyethylene layer and a polypropylene layer, or a separator in which a material such as an aramid resin and ceramic is applied on a surface of the separator 13 may be used.

### [Non-Aqueous Electrolyte]

The non-aqueous electrolyte is a liquid electrolyte (electrolyte liquid) including a non-aqueous solvent and an electrolyte salt dissolved in the non-aqueous solvent. For the non-aqueous solvent, esters, ethers, nitriles such as acetonitrile, amides such as dimethylformamide, a mixed solvent of two or more thereof, or the like may be used, for example. The non-aqueous solvents may contain a halogen-substituted derivative in which the hydrogen atoms of these solvents are at least partially replaced with a halogen atom such as fluorine.

Examples of the esters include: cyclic carbonates such as ethylene carbonate (EC), propylene carbonate (PC), and butylene carbonate; chain carbonates such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylates such as γ-butyrolactone and γ-valerolactone; and chain carboxylates such as methyl acetate, ethyl acetate, propyl acetate, methyl propionate (MP), and ethyl propionate.

Examples of the ethers include: cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and a crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

As the halogen-substituted derivative, fluorinated cyclic carbonates such as fluoroethylene carbonate (FEC), fluorinated chain carbonates, fluorinated chain carboxylates such as methyl fluoropropionate (FMP), and the like are preferably used.

The electrolyte salt is preferably a lithium salt. Examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (1<x<6, and "n" represents 1 or 2), LiB₁₀Cl₁₀, LiCl, LiBr, LiI, lithium chloroborane, a lithium lower aliphatic carboxylate, borate salts such as Li₂B₄O₇ and Li(B(C₂O₄)F₂), and imide salts such as LiN(SO₂CF₃)₂ and LiN(C₁F₂ₗ₊₁SO₂)(CₘF₂ₘ₊₁SO₂) {"1" and "m" represent integers of greater than or equal to 1}. These lithium salts may be used singly, or a plurality of types thereof may be mixed for use. Among them, LiPF₆ is preferably used from the viewpoints of ion conductivity, electrochemical stability, and the like. A concentration of the lithium salt is preferably greater than or equal to 0.8 mol and less than or equal to 1.8 mol per litter of the solvent.

### EXAMPLES

Hereinafter, the present disclosure will be further described with Examples and Comparative Examples, but the present disclosure is not limited to the following Examples.

### [Production of Positive Electrode Active Material]

### <Example 1>

A composite hydroxide obtained by a coprecipitation method and represented by [Ni_{0.91}Co_{0.04}Al_{0.05}](OH)₂ was calcined at 500°C for 8 hours to obtain a composite oxide (Ni_{0.91}Co_{0.04}Al_{0.05}O₂). Then, LiOH, the above composite oxide, and Nb₂O₅ as a Me compound were mixed so that a mole ratio between: Li; a total amount of Ni, Co, and Al; and Nb was 1.03:1:0.0001 to obtain a mixture. This mixture was calcined under an oxygen flow (at a flow rate of 2 mL/min per 10 cm³ and 5 L/min per kilogram of the mixture) at an oxygen concentration of 95% from room temperature to 650°C at a heating rate of 2.0°C/min, then calcined from 650°C to 760°C at a heating rate of 0.5°C/min, washed with water, and dried to produce a lithium-transition metal composite oxide in which a Me-containing layer was formed on surfaces of primary particles. To this lithium-transition metal composite oxide, water was added to wet the composite oxide, and then WO₃ was added, and the resultant was subjected to a thermal treatment at 300°C for 8 hours to obtain a positive electrode active material of Example 1. At this time, WO₃ was added so that W was 0.06 mol% relative to a total number of moles of metal elements in the lithium-transition metal composite oxide excluding Li. As a result of analysis by an ICP atomic emission spectrometer (trade name "iCAP6300", manufactured by Thermo Fisher Scientific Inc.), the composition of the positive electrode active material was LiNi_{0.91}Co_{0.04}Al_{0.05}Nb_{0.0001} W_{0.0006}O₂.

### [Production of Positive Electrode]

95 parts by mass of the positive electrode active material, 3 parts by mass of acetylene black, and 2 parts by mass of polyvinylidene fluoride (PVDF) were mixed. To this mixture, methylcellulose (weight-average molecular weight: 50000) was added at 0.01 mass% relative to a mass of the positive electrode active material, and an appropriate amount of N-methyl-2-pyrrolidone (NMP) was added to prepare a positive electrode mixture slurry. Then, this positive electrode mixture slurry was applied on both surfaces of a band-shaped positive electrode current collector composed of aluminum foil, dried, then rolled, and cut to a predetermined electrode size to produce a positive electrode in which a positive electrode mixture layer was formed on both the surfaces of the positive electrode current collector. At a substantially central part in a longitudinal direction of the positive electrode, a positive electrode exposed portion where the mixture layer was absent and the current collector surface was exposed was provided. A positive electrode lead made of aluminum was welded with the positive electrode exposed portion. An active material density of the positive electrode mixture layer was 3.60 g/cm³.

### [Production of Negative Electrode]

As a negative electrode active material, a mixture of 99 parts by mass of artificial graphite and 1 part by mass of silicon oxide (SiO) was used. 100 parts by mass of this mixture, 1 part by mass of carboxymethylcellulose (CMC), and 1 part by mass of styrene-butadiene rubber (SBR) were mixed, and an appropriate amount of water was added thereto to prepare a negative electrode mixture slurry. Then, this negative electrode mixture slurry was applied on both surfaces of a band-shaped negative electrode current collector composed of copper foil, dried, then rolled, and cut to a predetermined electrode size to produce a negative electrode in which a negative electrode mixture layer was formed on both the surfaces of the negative electrode current collector. At an outer winding end of the negative electrode, a negative electrode exposed portion where the mixture layer was absent and the current collector surface was exposed was provided. A negative electrode lead made of nickel was welded with the negative electrode exposed portion.

### [Preparation of Electrolyte Liquid]

To 100 parts by mass of a mixed solvent composed of ethylene carbonate (EC), ethyl methyl carbonate (EMC), and dimethyl carbonate (DMC) (EC:EMC:DMC = 2:2:6 at a volume ratio), 2 parts by mass of vinylene carbonate (VC) was added. Into this mixed solvent, LiPF₆ was dissolved so that the concentration was 1.0 mol/L to prepare an electrolyte liquid.

### [Production of Test Cell]

The aluminum lead was attached to the exposed portion of the positive electrode including the positive electrode active material of Example 1, and the nickel lead was attached to the exposed portion of the negative electrode. The positive electrode and the negative electrode were spirally wound via a separator made of a polyolefin to produce a wound electrode assembly. This electrode assembly was housed in an exterior, the non-aqueous electrolyte liquid was injected, and then an opening of the exterior was sealed to obtain a test cell.

### [Evaluation of Capacity Retention]

Under an environment temperature at 25°C, the test cell was charged at a constant current of 0.3 C until a battery voltage reached 4.2 V, and further charged at a constant voltage of 4.2 V until a current value reached 0.02 C. Thereafter, the test cell was discharged at a constant current of 0.3 C until the battery voltage reached 2.5 V. This charge and discharge was specified as one cycle, and 300 cycles were performed. A capacity retention of the test cell was determined with the following formula to evaluate charge-discharge cycle characteristics. Capacity retention (%) = (Discharge capacity at 300th cycle / Discharge capacity at 1st cycle) × 100

### [Evaluation of Load Characteristics]

Under an environment temperature at 25°C, the test cell was charged at a constant current of 0.3 C until a battery voltage reached 4.2 V, and further charged at a constant voltage of 4.2 V until a current value reached 0.02 C. Thereafter, the test cell was discharged at a constant current of 0.1 C until the battery voltage reached 2.5 V to measure a 0.1-C discharge capacity. Then, the battery was charged under the same condition as above, and then discharged at a constant current of 2 C until the battery voltage reached 2.5 V to measure a 2-C discharge capacity. Load characteristics were calculated with the following formula. Load characteristics (%) = (2-C discharge capacity / 0.1-C discharge capacity) × 100

### <Examples 2 to 10 and Comparative Examples 1 to 11>

Test cells were obtained and evaluated in the same manner as in Example 1 except that the type and amount of the Me compound added and the amount of WO₃ added in the production of the positive electrode active material, and the amount of methylcellulose added in the production of the positive electrode were changed as described in Table 1.

### <Comparative Example 12>

A test cell was obtained and evaluated in the same manner as in Example 1 except that, in the production of the positive electrode active material, WO₃ was not added to the lithium-transition metal composite oxide but WO₃ was mixed together with LiOH, the composite oxide, and the Me compound.

### <Example 11>

A test cell was obtained and evaluated in the same manner as in Example 2 except that, in the production of the positive electrode active material, the composition of the composite hydroxide produced by the coprecipitation method was changed to obtain a composite oxide represented by Ni_{0.85}Co_{0.10}Al_{0.05}O₂.

### <Comparative Examples 13 to 17>

Test cells were obtained and evaluated in the same manner as in Example 11 except that the amount of Nb₂O₅ added and the amount of WO₃ added in the production of the positive electrode active material, and the amount of methylcellulose added in the production of the positive electrode were changed as described in Table 1.

### <Example 12>

A test cell was obtained and evaluated in the same manner as in Example 2 except that, in the production of the positive electrode active material, the composition of the composite hydroxide produced by the coprecipitation method was changed to obtain a composite oxide represented by Ni_{0.85}Co_{0.10}Al_{0.05}O₂.

### <Comparative Examples 18 to 22>

Test cells were obtained and evaluated in the same manner as in Example 12 except that the amount of Nb₂O₅ added and the amount of WO₃ added in the production of the positive electrode active material, and the amount of methylcellulose added in the production of the positive electrode were changed as described in Table 1.

Tables 1 to 3 separately show the evaluation results on the test cells of Examples and Comparative Examples. The capacity retention and the load characteristics of the test cells of Examples 1 to 10 and Comparative Examples 2 to 12 shown in Table 1 are respective values relative to the capacity retention and the load characteristics of the test cell of Comparative Example 1 being 100. The capacity retention and the load characteristics of the test cells of Example 11 and Comparative Examples 14 to 17 shown in Table 2 are each value relative to the capacity retention and the load characteristics of the test cell of Comparative Example 13 being 100. The capacity retention and the load characteristics of the test cells of Example 12 and Comparative Examples 19 to 22 shown in Table 3 are each value relative to the capacity retention and the load characteristics of the test cell of Comparative Example 18 being 100. The description "-" in the column of "Presence/absence of W on Me surface" in Tables 1 to 3 represents absence of Me or W. The description "-" in the columns other than "Presence/absence of W on Me surface" in Tables 1 to 3 represents zero.

**[Table 1]**

| | Composition of lith ium-transition metal composite oxide [mol ratio] | | | | Elements on primary particle surfaces [mol ratio] | | | | | Presence /absence of W on Me surface | Cellulose derivative [mass%] | Capacity retention | Load characteristics |
|---|---|---|---|---|---|---|---|---|---|---|---|---|---|
| | Ni | Co | Al | Mn | Nb | Sr | Mo | Ca | W | | | | |
| Example1 | 91 | 4 | 5 | - | 0.01 | - | - | - | 0.06 | Presence | 0.01 | 108 | 105 |
| Exampl e2 | 91 | 4 | 5 | - | 0.5 | - | - | - | 0.06 | Presence | 0.01 | 109 | 106 |
| Example3 | 91 | 4 | 5 | - | - | 0.01 | - | - | 0.06 | Presence | 0.01 | 109 | *105* |
| Example4 | 91 | 4 | 5 | - | - | 0.5 | - | - | 0.06 | Presence | 0.01 | 111 | 106 |
| Example5 | 91 | 4 | 5 | - | - | - | 0.01 | - | 0.06 | Presence | 0.01 | 109 | 104 |
| Example6 | 91 | 4 | 5 | - | - | - | 0.5 | - | 0.06 | Presence | 0.01 | 111 | 106 |
| Example7 | 91 | 4 | 5 | - | - | - | - | 0.01 | 0.06 | Presence | 0.01 | 108 | 104 |
| Example8 | 91 | 4 | 5 | - | - | - | - | 0.5 | 0.06 | Presence | 0.01 | 111 | 105 |
| Exampl e9 | 91 | 4 | 5 | - | 0.5 | - | - | - | 0.06 | Presence | 0.07 | 108 | 103 |
| Example10 | 91 | 4 | 5 | - | 0.5 | - | - | - | 0.2 | Presence | 0.01 | 108 | 106 |
| Comparative Example1 | 91 | 4 | 5 | - | - | - | - | - | - | - | - | 100 | 100 |
| Comparative Example2 | 91 | 4 | 5 | - | - | - | - | - | - | - | 0.01 | 90 | 105 |
| Comparative Example3 | 91 | 4 | 5 | - | - | - | - | - | 0.06 | - | - | 102 | 100 |
| Comparative Example4 | 91 | 4 | 5 | - | - | - | - | - | 0.06 | - | 0.01 | 98 | 104 |
| Comparative Example5 | 91 | 4 | 5 | - | 0.5 | - | - | - | - | - | - | 101 | 97 |
| Comparative Example6 | 91 | 4 | 5 | - | 0.5 | - | - | - | 0.06 | Presence | - | 102 | 97 |
| Comparative Example7 | 91 | 4 | 5 | - | 0.5 | - | - | - | - | - | 0.01 | 97 | 102 |
| Comparative Example8 | 91 | 4 | 5 | - | 1.5 | - | - | - | 0.06 | Presence | 0.01 | 99 | 96 |
| Comparative Example9 | 91 | 4 | 5 | - | - | 1.5 | - | - | 0.06 | Presence | 0.01 | 99 | 97 |
| Comparative Example10 | 91 | 4 | 5 | - | - | - | 1.5 | - | 0.06 | Presence | 0.01 | 96 | 96 |
| Comparative Example11 | 91 | 4 | 5 | - | - | - | - | 1.5 | 0.06 | Presence | 0.01 | 98 | 96 |
| Comparative Example12 | 91 | 4 | 5 | - | 0.01 | - | - | - | 0.06 | Absence | 0.01 | 95 | 93 |

**[Table 2]**

| | Composition of lithi um-transition metal composite oxide mol ratio] | | | | Elements on primary particle surface s [mol ratio] | | | | | Presence /absence of W on Me surface | Cellulose derivative [mass%] | Capacity retention | Load characteristics |
|---|---|---|---|---|---|---|---|---|---|---|---|---|---|
| | Ni | Co | Al | Mn | Nb | Sr | Mo | Ca | W | | | | |
| Example11 | 85 | 10 | *5* | - | 0.5 | - | - | - | 0.06 | Presence | 0.01 | 111 | 107 |
| Comparative Example13 | 85 | 10 | 5 | - | - | - | - | - | - | - | - | 100 | 100 |
| Comparative Example14 | 85 | 10 | 5 | - | 0.5 | - | - | - | - | - | - | 101 | 98 |
| Comparative Example15 | 85 | 10 | 5 | - | - | - | - | - | 0.06 | - | - | 102 | 100 |
| Comparative Example16 | 85 | 10 | 5 | - | - | - | - | - | - | - | 0.01 | 91 | 104 |
| Comparative Example17 | 85 | 10 | 5 | - | - | - | - | - | 0.06 | - | 0.01 | 97 | 104 |

**[Table 3]**

| | Composition of lithi um-transition metal composite oxide [mol ratio] | | | | Elements on primary particle surface s [mol ratio] | | | | | Presence /absence of W on Me sur face | Cellulose derivative [mass%] | Capacity retention | Load characteristics |
|---|---|---|---|---|---|---|---|---|---|---|---|---|---|
| | Ni | Co | Al | Mn | Nb | Sr | Mo | Ca | W | | | | |
| Example12 | 93 | - | 5 | 2 | 0.5 | - | - | - | 0.06 | Presence | 0.01 | 108 | 110 |
| Comparative Example18 | 93 | - | 5 | 2 | - | - | - | - | - | - | - | 100 | 100 |
| Comparative Example19 | 93 | - | 5 | 2 | 0.5 | - | - | - | - | - | - | 101 | 98 |
| Comparative Example20 | 93 | - | 5 | 2 | - | - | - | - | 0.06 | - | - | 102 | 100 |
| Comparative Example21 | 93 | - | 5 | 2 | - | - | - | - | - | - | 0.01 | 91 | 104 |
| Comparative Example22 | 93 | - | 5 | 2 | - | - | - | - | 0.06 | - | 0.01 | 95 | 104 |

In all Tables 1 to 3, the test cells of Examples had higher capacity retention and load characteristics than those of the test cells of Comparative Examples, and excellent charge-discharge cycle characteristics and load characteristics. Comparative Example 2 shows the result in a case where the positive electrode mixture layer contains methylcellulose, and the Me-containing layer and the W-containing layer are absent on the surfaces of the primary particles of the lithium-transition metal composite oxide. Comparative Example 3 shows the result in a case where the Me-containing layer is absent and the W-containing layer is present on the surfaces of the primary particles of the lithium-transition metal composite oxide, and the positive electrode mixture layer contains no methylcellulose. Comparative Example 5 shows the result in a case where the W-containing layer is absent and the Me-containing layer is present on the surfaces of the primary particles of the lithium-transition metal composite oxide, and the positive electrode mixture layer contains no methylcellulose. The test cell of Example 2 has improved capacity retention and load characteristics beyond a sum of the effects of the cellulose derivative, the W-containing layer, and the Me-containing layer calculated from Comparative Examples 2, 3, and 5, which finds the specific synergistic effect.

### REFERENCE SIGNS LIST

10 Secondary battery, 11 Positive electrode, 12 Negative electrode, 13 Separator, 14 Electrode assembly, 15 Exterior, 16 Sealing assembly, 17, 18 Insulating plate, 19 Positive electrode lead, 20 Negative electrode lead, 21 Grooved portion, 22 Filter, 23 Lower vent member, 24 Insulating member, 25 Upper vent member, 26 Cap, 27 Gasket

## Claims

1. A non-aqueous electrolyte secondary battery, comprising:
a positive electrode;
a negative electrode; and
a non-aqueous electrolyte, wherein
the positive electrode has a positive electrode current collector and a positive electrode mixture layer formed on a surface of the positive electrode current collector,
the positive electrode mixture layer includes a positive electrode active material and a cellulose derivative,
the positive electrode active material contains a lithium-transition metal composite oxide containing greater than or equal to 80 mol% of Ni relative to a total number of moles of metal elements excluding Li,
the lithium-transition metal composite oxide has secondary particles each formed by aggregation of primary particles,
on surfaces of the primary particles, a Me-containing layer that contains Me, wherein Me represents at least one element selected from the group consisting of Nb, Sr, Mo, and Ca, and a W-containing layer that contains W are formed,
a content of the Me in the Me-containing layer is greater than or equal to 0.005 mol% and less than or equal to 1 mol% relative to the total number of moles of metal elements in the lithium-transition metal composite oxide excluding Li, and
the W-containing layer coats at least a part of the Me-containing layer.

2. The non-aqueous electrolyte secondary battery according to claim 1, wherein the lithium-transition metal composite oxide is represented by the general formula LiₐNi_{b}Co_{1-b-c}X_{c}O_{d}, wherein 0.9≤a≤1.25, 0.80≤b≤0.96, 0≤c≤0.20, 1.9≤d≤2.1, and X represents at least one element selected from the group consisting of Mn and Al.

3. The non-aqueous electrolyte secondary battery according to claim 1 or 2, wherein a content of W in the W-containing layer is less than or equal to 0.2 mol% relative to the total number of moles of metal elements in the lithium-transition metal composite oxide excluding Li.

4. The non-aqueous electrolyte secondary battery according to any one of claims 1 to 3, wherein a content of the cellulose derivative in the positive electrode mixture layer is greater than or equal to 0.005 mass% and less than or equal to 0.5 mass% relative to a total mass of the positive electrode active material.

5. The non-aqueous electrolyte secondary battery according to any one of claims 1 to 4, wherein the cellulose derivative includes methylcellulose having a weight-average molecular weight of greater than or equal to 10000 and less than or equal to 150000.
